(19) Europäisches Patentamt
European Patent Office
Office européen des brevets

(11) **EP 4 246 624 A1**

(12) **EUROPEAN PATENT APPLICATION**
published in accordance with Art. 153(4) EPC

(43) Date of publication:
**20.09.2023 Bulletin 2023/38**

(21) Application number: **22742875.2**

(22) Date of filing: **21.01.2022**

(51) International Patent Classification (IPC):
$H01M\ 4/36$ (2006.01)    $H01M\ 4/525$ (2010.01)
$H01M\ 4/505$ (2010.01)    $H01M\ 4/62$ (2006.01)
$C01G\ 53/00$ (2006.01)    $H01M\ 10/052$ (2010.01)

(86) International application number:
**PCT/KR2022/001115**

(87) International publication number:
**WO 2022/158899 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2021 KR 20210008933**

(71) Applicant: **Lg Chem, Ltd.**
**Seoul 07336 (KR)**

(72) Inventors:
• **EOM, Jun Ho**
  **Daejeon 34122 (KR)**
• **KWAK, No Woo**
  **Daejeon 34122 (KR)**
• **KIM, Ji Hye**
  **Daejeon 34122 (KR)**
• **JUNG, Byoung Hun**
  **Daejeon 34122 (KR)**
• **LIM, Chae Jin**
  **Daejeon 34122 (KR)**
• **PARK, Na Ri**
  **Daejeon 34122 (KR)**
• **LEE, Jun Won**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR PREPARING POSITIVE ELECTRODE ACTIVE MATERIAL, AND POSITIVE ELECTRODE ACTIVE MATERIAL**

(57) The present invention relates to a method of preparing a positive electrode active material which includes steps of (A) preparing a pre-sintered product by mixing a positive electrode active material precursor containing 70 mol% or more of nickel (Ni) among total metals and a lithium-containing raw material and performing primary sintering, (B) preparing a lithium transition metal oxide by mixing the pre-sintered product and an aluminum-containing raw material and performing secondary sintering in an oxygen atmosphere containing 20 vol% to 100 vol% of oxygen, and (c) mixing the lithium transition metal oxide and a boron-containing raw material and performing a heat treatment to form a coating layer, wherein the secondary sintering is performed while reducing an oxygen concentration according to sintering time, a positive electrode active material prepared by the above preparation method, and a positive electrode for a lithium secondary battery and a lithium secondary battery which include the positive electrode active material.

[FIG. 1]

EP 4 246 624 A1

**Description**

## TECHNICAL FIELD

### Cross-reference to Related Applications

This application claims priority from Korean Patent Application No. 10-2021-0008933, filed on January 21, 2021, the disclosure of which is incorporated by reference herein.

### Technical Field

The present invention relates to a method of preparing a positive electrode active material for a lithium secondary battery, a positive electrode active material prepared by the preparation method, and a positive electrode for a lithium secondary battery and a lithium secondary battery which include the positive electrode active material.

## BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as $LiCoO_2$, having a high operating voltage and excellent capacity characteristics has been mainly used. However, since the $LiCoO_2$ has very poor thermal properties due to an unstable crystal structure caused by delithiation and is expensive, there is a limitation in using a large amount of the $LiCoO_2$ as a power source for applications such as electric vehicles.

Lithium manganese composite metal oxides ($LiMnO_2$, $LiMn_2O_4$, etc.), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, $LiNi_{1-\alpha}C_{O\alpha}O_2$($\alpha$=0.1 to 0.3), in which a portion of nickel is substituted with cobalt, or a lithium nickel cobalt metal oxide, in which a portion of nickel is substituted with manganese (Mn), cobalt (Co), or aluminum (Al), has been developed.

However, with respect to the lithium nickel cobalt metal oxide, there is a limitation in that capacity is low. In order to increase the capacity of the lithium nickel cobalt metal oxide, a method of increasing an amount of nickel included in the lithium nickel cobalt metal oxide has been studied, but, in this case, a washing process was essential due to the presence of unreacted residual lithium on a surface thereof, and, since surface defects of the positive electrode active material occurred due to the washing process, life characteristics of the battery were degraded.

In order to overcome this issue, conventionally, a method of forming a coating layer on the surface of the positive electrode active material at a low temperature after washing of the positive electrode active material has been studied, but there are still limitations in terms of improving high-temperature life characteristics and resistance characteristics.

Thus, there is a need to develop a positive electrode active material having improved high-temperature life characteristics and resistance characteristics.

## DISCLOSURE OF THE INVENTION

## TECHNICAL PROBLEM

An aspect of the present invention provides a method of preparing a positive electrode active material having improved high-temperature life characteristics and high-temperature resistance characteristics and a positive electrode active material prepared thereby.

However, the object of the present invention is not limited to the aforesaid, but other objects not described herein will be clearly understood by those skilled in the art from descriptions below.

## TECHNICAL SOLUTION

According to an aspect of the present invention, there is provided a method of preparing a positive electrode active material which includes steps of: (A) preparing a pre-sintered product by mixing a positive electrode active material precursor containing 70 mol% or more of nickel (Ni) among total metals and a lithium-containing raw material and performing primary sintering; (B) preparing a lithium transition metal oxide by mixing the pre-sintered product and an aluminum-containing raw material and performing secondary sintering in an oxygen atmosphere containing 20 vol% to 100 vol% of oxygen; and (c) mixing the lithium transition metal oxide and a boron-containing raw material and performing a heat treatment to form a coating layer, wherein the secondary sintering is performed while reducing an oxygen concentration according to sintering time.

According to another aspect of the present invention, there is provided a positive electrode active material including a lithium transition metal oxide which contains 70 mol% or more of nickel (Ni) among total metals excluding lithium and is in a form of a secondary particle formed by aggregation of primary particles; and a coating layer containing aluminum (Al) and boron (B) which is formed on the lithium transition metal oxide, wherein the primary particle included in a core portion, which is a region corresponding to 60 vol% of a total volume of the positive electrode active material from a center of the positive electrode active material, has an Al concentration gradient that decreases from a surface portion to a center portion, and a concentration of Al in the surface portion of the primary particle is 2 to 6 times a concentration of Al in the center portion of the primary particle.

According to another aspect of the present invention, there is provided a positive electrode for a lithium secondary battery which includes the positive electrode active material according to the present invention.

According to another aspect of the present invention, there is provided a lithium secondary battery including the positive electrode according to the present invention.

## ADVANTAGEOUS EFFECTS

According to the present invention, high-temperature life characteristics and high-temperature resistance characteristics of a battery using a positive electrode active material to be prepared may be improved by controlling a doping degree of aluminum present in a primary particle included in a core portion of the positive electrode active material by adding the aluminum before secondary sintering after pre-sintering (primary sintering) and performing the secondary sintering in a specific oxygen atmosphere during the preparation of the positive electrode active material.

## BRIEF DESCRIPTION OF THE DRAWINGS

FIGS. 1 through 4 are graphs illustrating oxygen atmospheres during secondary sintering in Examples 1 and 2 and Comparative Examples 1 and 2, respectively;
FIGS. 5 through 7 are views illustrating transmission electron microscope (TEM) analysis results of a positive electrode active material of Example 1;
FIGS. 8 through 10 are views illustrating TEM analysis results of a positive electrode active material of Comparative Example 1; and
FIG. 11 is a graph illustrating capacity retentions (unit: %) and resistance increase rates (unit: %) at a high temperature (45°C) of lithium secondary batteries according to Examples 1 and 2 and Comparative Examples 1 and 2.

## MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

The term "on" in the present specification means not only a case in which one component is formed directly on an upper surface of another component, but also includes a case in which intervening components may also be present.

In the present specification, the expression "primary particle" denotes the smallest unit of particles recognized when a positive electrode active material is observed through a scanning electron microscope, and the expression "secondary particle" denotes a secondary structure formed by aggregation of a plurality of the primary particles.

**Method of Preparing Positive Electrode Active Material**

Hereinafter, a method of preparing a positive electrode active material according to the present invention will be described in detail.

The method of preparing a positive electrode active material according to the present invention includes the steps of: (A) preparing a pre-sintered product by mixing a positive electrode active material precursor containing 70 mol% or more of nickel (Ni) among total metals and a lithium-containing raw material and performing primary sintering; (B) preparing a lithium transition metal oxide by mixing the pre-sintered product and an aluminum-containing raw material and performing secondary sintering in an oxygen atmosphere containing 20 vol% to 100 vol% of oxygen; and (c) mixing the lithium transition metal oxide and a boron-containing raw material and performing a heat treatment to form a coating layer, wherein the secondary sintering is performed while reducing an oxygen concentration according to sintering time.

The present inventors have found that high-temperature life characteristics and high-temperature resistance characteristics of a battery using a positive electrode active material to be prepared may be improved by controlling a doping degree of aluminum present on a surface of a primary particle included in a core portion of the positive electrode active material by adding the aluminum in a secondary sintering step after pre-sintering (primary sintering) and performing the secondary sintering in a specific oxygen atmosphere during the preparation of the positive electrode active material.

Hereinafter, each step will be described in more detail.

**Step (A)**

Step (A) is a step of preparing a pre-sintered product by performing primary sintering on a mixture in which a positive electrode active material precursor containing 70 mol% or more of nickel (Ni) among total metals and a lithium-containing raw material are mixed.

The positive electrode active material precursor may have a composition represented by Formula 1-1 or Formula 1-2.

[Formula 1-1]        $Ni_{a1}Co_{b1}Mn_{c1}M^1_{d1}(OH)_2$

[Formula 1-2]        $Ni_{a1}Co_{b1}Mn_{c1}M^1_{d1}O \cdot OH$

In Formula 1-1 and Formula 1-2,

$M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
$0.7 \leq a1 \leq 1.0$, $0 \leq b1 \leq 0.3$, $0 \leq c1 \leq 0.3$, and $0 \leq d1 \leq 0.1$.
a1 represents an atomic fraction of nickel among metallic elements in the precursor, wherein a1 may satisfy $0.7 \leq a1 < 1$, $0.7 \leq a1 \leq 0.98$, or $0.7 \leq a1 \leq 0.95$.
b1 represents an atomic fraction of cobalt among the metallic elements in the precursor, wherein b1 may satisfy $0 < b1 \leq 0.3$ or $0.01 \leq b1 \leq 0.3$.
c1 represents an atomic fraction of manganese among the metallic elements in the precursor, wherein c1 may satisfy $0 < c1 \leq 0.3$ or $0.01 \leq c1 \leq 0.3$.
d1 represents an atomic fraction of $M^1$ among the metallic elements in the precursor, wherein d1 may satisfy $0 \leq d1 \leq 0.1$ or $0 \leq d1 \leq 0.05$.

The lithium-containing raw material may include at least one selected from lithium hydroxide hydrate, lithium carbonate, and lithium hydroxide. The lithium-containing raw material may specifically be a lithium hydroxide hydrate, for example, $LiOH \cdot H_2O$. In this case, reactivity between the lithium-containing raw material and the precursor having a high atomic fraction of nickel among the metallic elements in the precursor may be improved.

The positive electrode active material precursor and the lithium-containing raw material may be mixed in a molar ratio of 1:1.0 to 1:1.10, particularly 1:1.03 to 1:1.09, and more particularly 1:1.05 to 1:1.09. In a case in which the lithium-containing raw material is mixed in a molar ratio of less than the above range, there is a concern that capacity of the positive electrode active material to be prepared is reduced, and, in a case in which the lithium-containing raw material is mixed in a molar ratio of greater than the above range, a large amount of unreacted lithium (Li) remains as a by-product, and capacity reduction and separation of positive electrode active material particles (causing a positive electrode active material coalescence phenomenon) may occur after sintering.

A primary sintering temperature may be in a range of 500°C to 775°C. The primary sintering temperature may specifically be in a range of 600°C to 760°C, for example, 620°C to 700°C. In a case in which the primary sintering temperature is within the above range, a crystal structure of the pre-sintered product may be controlled, and, as a result, diffusion of aluminum during the secondary sintering may be appropriately controlled.

The primary sintering may be performed in an oxygen atmosphere. For example, the primary sintering may be performed in an oxygen atmosphere containing oxygen in an amount of 90 vol% or more, specifically, 95 vol% or more. In this case, a pre-sintered product having a structurally stable phase may be formed.

The primary sintering may be performed for 2 hours to 15 hours. The sintering may be specifically performed for 3 hours to 10 hours, for example, 3 hours to 8 hours. In a case in which the primary sintering time is within the above range, sintering may be performed well without deviation for each sintering position, that is, uniformly.

Residual unreacted lithium is present on a surface of the pre-sintered product, wherein an amount of the residual lithium may be minimized through steps (B) and (C) according to the present invention.

## Step (B)

Step (B) is a step of preparing a lithium transition metal oxide, which contains 70 mol% or more of nickel (Ni) among total metals excluding lithium and is a secondary particle formed by aggregation of primary particles, by mixing the pre-sintered product prepared in step (A) and an aluminum-containing raw material, heating a mixture to a secondary sintering temperature, and then performing secondary sintering in an oxygen atmosphere containing 20 vol% to 100 vol% of oxygen. In this case, the secondary sintering is performed while reducing an oxygen concentration according to sintering time.

In the present invention, since a coating layer, in which aluminum is present in a high concentration, is formed on a surface portion of the primary particle included in a core portion, which is a region corresponding to 60 vol% of a total volume of the resultant positive electrode active material from a center of the positive electrode active material, by mixing the aluminum-containing raw material and performing the secondary sintering in a specific oxygen atmosphere in step (B), high-temperature life characteristics and high-temperature resistance characteristics of a secondary battery including the positive electrode active material may be improved.

The aluminum-containing raw material may be at least one selected from $Al(OH)_3$, $Al_2O_3$, $AlF_3$, $AlBr_3$, $AlPO_4$, $AlCl_3$, $Al(NO)_3$, $Al(NO_3)_3 \cdot 9H_2O$, $Al_2(SO_4)_3 \cdot H_2O$, $Al(H_2PO_4)_3$, $C_2H_5O_4Al$, $Al(SO)_4$, $NaAlO_2$, $Al_2CoO_4$, $LaAlO_3$, and $MgAl_2O_4$. The aluminum-containing raw material may be specifically $Al(OH)_3$ and $Al_2O_3$, and may be more specifically $Al(OH)_3$. In this case, since a melting point of the aluminum-containing raw material is low, aluminum may be uniformly diffused to exist abundantly and uniformly on a surface of the lithium transition metal oxide.

The aluminum-containing raw material may be added in an amount of 1,000 ppm to 10,000 ppm, particularly 2,000 ppm to 8,000 ppm, and more particularly 4,000 ppm to 6,000 ppm based on the pre-sintered product. In a case in which the amount of the aluminum-containing raw material is within the above range, a decrease in capacity of a battery may not only be prevented when the positive electrode active material to be prepared is use in the battery, but thermal stability may also be improved.

A secondary sintering temperature may be in a range of 730°C to 900°C. The secondary sintering temperature may specifically be in a range of 730°C to 850°C, for example, 750°C to 800°C. In a case in which the secondary sintering temperature is within the above range, since an appropriate crystal size is formed, life characteristics of a battery may be improved when the positive electrode active material to be prepared is use in the battery.

The secondary sintering temperature is higher than the primary sintering temperature, and a difference between the secondary sintering temperature and the primary sintering temperature may be in a range of 10°C to 250°C, particularly 20°C to 150°C, and more particularly 30°C to 140°C. In a case in which the difference between the secondary sintering temperature and the primary sintering temperature is within the above range, it may be advantageous to control the doping degree of the aluminum present on the surface of the primary particle.

The secondary sintering is performed in an oxygen atmosphere containing 20 vol% to 100 vol% of oxygen, particularly 20 vol% to 90 vol% of oxygen, and more particularly 30 vol% to 90 vol% of oxygen. In addition, the secondary sintering is performed while reducing the oxygen concentration according to the sintering time. In this case, there is an advantage that a segregation phenomenon, which occurs depending on the oxygen atmosphere during high-temperature sintering, occurs well. In a case in which the oxygen atmosphere contains less than 20 vol% of oxygen, there is a problem in that an amount of residual lithium having a more stable phase is increased due to structural instability of the positive electrode active material having a high nickel content.

An oxygen concentration reduction rate according to sintering time during the secondary sintering may be in a range of 0.5 vol%/hour to 15 vol%/hour, particularly 1 vol%/hour to 10 vol%/hour, and more particularly 2 vol%/hour to 10 vol%/hour. In a case in which the oxygen concentration reduction rate according to the sintering time during the secondary sintering is within the above range, there is an advantage that the segregation phenomenon, which occurs depending on the oxygen atmosphere during high-temperature sintering, occurs well.

The secondary sintering may be performed for 2 hours to 15 hours. The sintering may be specifically performed for 3 hours to 10 hours, for example, 3 hours to 8 hours. In a case in which the secondary sintering time is within the above range, sintering may be performed well without deviation for each sintering position, that is, uniformly.

The step (B) may further include a step (b1) of cooling from the secondary sintering temperature to room temperature after the secondary sintering, wherein the step (b1) may be performed in an oxygen atmosphere containing 20 vol% to 75 vol%, for example, 40 vol% to 60 vol% of oxygen. In this case, physical properties of the lithium transition metal oxide formed as a result of the secondary sintering, for example, a concentration gradient of aluminum (Al) present in the primary particle included in the lithium transition metal oxide may be maintained.

Also, the step (B) may further include a step (b2) of washing and drying after the secondary sintering.

The washing is a process for removing unreacted residual lithium, wherein it is a process of washing by mixing a secondary sintered product and a washing solution and then separating the secondary sintered product from the washing solution.

The washing solution may be water or ethanol, but is not limited thereto.

The washing solution may be mixed in an amount of 60 parts by weight to 200 parts by weight, particularly 60 parts by weight to 150 parts by weight, and more particularly 80 parts by weight to 120 parts by weight based on 100 parts by weight of the secondary sintered product. In a case in which the amount of the washing solution is within the above range, residual lithium present on a surface of the secondary sintered product may be easily removed. In a case in which the amount of the washing solution is lower than the above range, since an amount of the residual lithium present on the surface of the secondary sintered product is large, there is a concern that gas is generated when the secondary sintered product is used in the battery, and, in contrast, in a case in which the amount of the washing solution is higher than the above range, since the surface of the lithium transition metal oxide is damaged, lifetime may be reduced and a resistance increase rate may be increased when the lithium transition metal oxide is used in the battery.

The process of separating the secondary sintered product from the washing solution may be performed such that a water content of the secondary sintered product separated from the washing solution is in a range of 3% to 15%. Specifically, the process of separating the secondary sintered product from the washing solution may be performed such that the water content of the secondary sintered product is in a range of 5% to 12%, for example, 5% to 10%.

In this case, the water content denotes a moisture content included in the secondary sintered product before drying after the separation from the washing solution, wherein it may be calculated according to Equation 1 below.

[Equation 1]

Water content (%) = {[(mass of the secondary sintered product before drying)-(mass of the secondary sintered product after drying)]/(mass of the secondary sintered product before drying)} x 100

In this case, the drying may be performed by drying the secondary sintered product separated from the washing solution at 130°C for 300 minutes.

In a case in which the water content is within the above range, since a surface state, i.e., surface properties, may be controlled, a coating layer having a uniform composition and a uniform thickness may be easily formed on the surface of the lithium transition metal oxide.

The separation may be performed using a pressure-reducing filter having an average pore size of 1 um to 50 um. In this case, the secondary sintered product may be separated from the washing solution in a short time.

The drying is to remove moisture from the lithium transition metal oxide containing the moisture through the washing process, wherein, after the moisture is removed by using a vacuum pump, drying may be performed in a temperature range of 60°C to 150°C. Specifically, the drying may be performed in a temperature range of 60°C to 150°C for 3 hours or more.

As a result, the lithium transition metal oxide prepared through step (B) may be a lithium transition metal oxide which contains 70 mol% or more of nickel (Ni) among total metals excluding lithium and is in a form of a secondary particle formed by aggregation of primary particles, and, specifically, may have a composition represented by Formula 2 below.

[Formula 2]     $Li_xNi_{a2}Co_{b2}Mn_{c2}Al_{d2}M^1_{e2}O_2$

In Formula 2,

M$^1$ is at least one selected from Zr, B, W, Mg, Ce, Hf, Ta, La, Ti, Sr, Ba, F, P, and S, and

$0.9x \le x \le 1.12$, $0.7 \le a2 \le 1.0$, $0 \le b2 \le 0.3$, $0 \le c2 \le 0.3$, $0 < d2 \le 0.2$, and $0 \le e2 \le 0.1$.

a2 represents an atomic fraction of nickel among metallic elements other than lithium in the positive electrode active material, wherein a2 may satisfy $0.7 \le a2 < 1.0$, $0.7 \le a2 \le 0.98$, or $0.7 \le a2 \le 0.95$.

b2 represents an atomic fraction of cobalt among the metallic elements other than lithium in the positive electrode active material, wherein b2 may satisfy $0 < b2 \le 0.3$ or $0.01 \le b2 \le 0.3$.

c2 represents an atomic fraction of manganese among the metallic elements other than lithium in the positive electrode active material, wherein c2 may satisfy $0 < c2 \le 0.3$ or $0.01 \le c2 \le 0.3$.

d2 represents an atomic fraction of aluminum among the metallic elements other than lithium in the positive electrode active material, wherein d2 may satisfy $0 \le d2 \le 0.2$, $0 \le d2 \le 0.1$, or $0 \le d2 \le 0.05$.

e2 represents an atomic fraction of M$^1$ among the metallic elements other than lithium in the positive electrode active material, wherein e2 may satisfy $0 \le e2 \le 0.1$ or $0 \le e2 \le 0.05$.

**Step (C)**

Step (C) is a step of mixing the lithium transition metal oxide prepared in step (B) and a boron-containing raw material and performing a heat treatment to form a coating layer.

A coating layer containing boron is formed on the lithium transition metal oxide through step (C). Specifically, a coating layer including a Li-Al-B-O solid solution is formed on the surface of the lithium transition metal oxide. That is, in a case in which the lithium transition metal oxide and the boron-containing raw material are mixed and heat-treated, a coating layer including a Li-Al-B-O solid solution as well as a Li-B-O solid solution is formed. In this case, since the coating layer is strengthened, a side reaction between the positive electrode active material and an electrolyte solution may be more effectively suppressed. Additionally, an aluminum-rich Ni-Co-Mn-Al solid solution and an aluminum-rich Ni-Co-Mn-Al-B solid solution may be further included in the coating layer. In addition, since aluminum is abundantly present on the surface of the primary particle of the lithium transition metal oxide, aluminum may also be abundantly present in the coating layer.

The boron-containing raw material may be at least one selected from $H_3BO_3$, $B_2H_4O_4$, $B_2O_3$, $LiBO_2$, $Li_2B_4O_7$, and $AlBO_3$. The boron-containing raw material may be specifically $H_3BO_3$ and $B_2O_3$, and may be more specifically $H_3BO_3$. In this case, since a melting point of the boron-containing raw material is low, a uniform coating layer may be formed.

The boron-containing raw material may be mixed in an amount of 0.1 part by weight to 1.5 parts by weight, particularly 0.2 part by weight to 1.0 part by weight, and more particularly 0.4 part by weight to 0.8 part by weight based on 100 parts by weight of the lithium transition metal oxide. In a case in which the amount of the boron-containing raw material is within the above range, since the coating layer is not only uniformly formed, but also the coating layer with an appropriate thickness is formed, life characteristics of a battery may be improved when the positive electrode active material to be prepared is use in the battery.

The mixing of the lithium transition metal oxide and the boron-containing raw material may be dry mixing. In this case, there is an advantage in that impurities may be minimized in comparison to a case of wet mixing.

A heat treatment temperature may be in a range of 250°C to 400°C. The heat treatment temperature may specifically be in a range of 250°C to 350°C, for example, 260°C to 330°C. In a case in which the heat treatment temperature is within the above range, since a coating layer is uniformly formed on the lithium transition metal oxide, life characteristics of a battery may be improved when the positive electrode active material is use in the battery. In a case in which the heat treatment temperature is lower than a lower limit of the above range, since reactivity of the boron-containing raw material is low, the boron-containing raw material remains on the surface of the lithium transition metal oxide to be able to act as a resistance, and, in a case in which the heat treatment temperature is higher than an upper limit of the above range, since the boron-containing raw material and lithium present on the surface of the lithium transition metal oxide may be overreacted, a large amount of lithium may be present in the coating layer.

**Positive Electrode Active Material**

Also, a positive electrode active material according to the present invention includes a lithium transition metal oxide which contains 70 mol% or more of nickel (Ni) among total metals excluding lithium and is in a form of a secondary particle formed by aggregation of primary particles; and a coating layer containing aluminum (Al) and boron (B) which is formed on the lithium transition metal oxide, wherein the primary particle included in a core portion, which is a region corresponding to 60 vol% of a total volume of the positive electrode active material from a center of the positive electrode active material, has an Al concentration gradient that decreases from a surface portion to a center portion, and a concentration of Al in the surface portion of the primary particle is 2 to 6 times a concentration of Al in the center portion of the primary particle.

The lithium transition metal oxide may have a composition represented by Formula 2 below.

$$[\text{Formula 2}] \qquad Li_xNi_{a2}Co_{b2}M_{nc2}Al_{d2}M^1_{e2}O_2$$

In Formula 2,

$M^1$ is at least one selected from Zr, B, W, Mg, Ce, Hf, Ta, La, Ti, Sr, Ba, F, P, and S, and
$0.9x \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.
a2 represents an atomic fraction of nickel among metallic elements other than lithium in the positive electrode active material, wherein a2 may satisfy $0.7 \leq a2 < 1.0$, $0.7 \leq a2 \leq 0.98$, or $0.7 \leq a2 \leq 0.95$.
b2 represents an atomic fraction of cobalt among the metallic elements other than lithium in the positive electrode active material, wherein b2 may satisfy $0 < b2 \leq 0.3$ or $0.01 \leq b2 \leq 0.3$.
c2 represents an atomic fraction of manganese among the metallic elements other than lithium in the positive electrode active material, wherein c2 may satisfy $0 < c2 \leq 0.3$ or $0.01 \leq c2 \leq 0.3$.
d2 represents an atomic fraction of aluminum among the metallic elements other than lithium in the positive electrode active material, wherein d2 may satisfy $0 \leq d2 \leq 0.2$, $0 \leq d2 \leq 0.1$, or $0 \leq d2 \leq 0.05$.
e2 represents an atomic fraction of $M^1$ among the metallic elements other than lithium in the positive electrode active material, wherein e2 may satisfy $0 \leq e2 \leq 0.1$ or $0 \leq e2 \leq 0.05$.

Since the positive electrode active material is prepared by the above-described preparation method, aluminum is present in a high concentration in the surface portion of the primary particle included in the core portion which is a region corresponding to 60 vol% of the total volume of the positive electrode active material from the center of the positive electrode active material, and thus, high-temperature life characteristics and high-temperature resistance characteristics of a secondary battery including the positive electrode active material may be improved.

All of the primary particles included in the entire positive electrode active material as well as the core portion, which is a region corresponding to 60 vol% of the total volume of the positive electrode active material from the center of the positive electrode active material, may have an Al concentration gradient that decreases from the surface portion to the center portion, and the concentration of Al in the surface portion of the primary particles included in the entire positive electrode active material may be 2 to 6 times the concentration of Al in the center portion of the primary particles.

The coating layer may include a spinel-like phase. In this case, since the phase is more stable than a case of a layered structure, a side reaction, which may occur on the surface during an electrochemical reaction, may be suppressed.

## Positive Electrode

Also, the present invention provides a positive electrode for a lithium secondary battery which includes the above positive electrode active material. Specifically, the positive electrode for a secondary battery includes a positive electrode collector and a positive electrode active material layer formed on the positive electrode collector, wherein the positive electrode active material layer includes a positive electrode active material according to the present invention.

In this case, since the positive electrode active material is the same as described above, detailed descriptions thereof will be omitted, and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and may optionally include a binder, if necessary, in addition to the positive electrode active material.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

## Examples

### Example 1

$Ni_{0.88}Co_{0.05}Mn_{0.07}(OH)_2$, as a positive electrode active material precursor, and $LiOH \cdot H_2O$ were mixed so that a molar ratio of Li:transition metals (Ni+Co+Mn) was 1.05:1, and primary sintering was performed at 640°C for 5 hours in an oxygen atmosphere containing 90 vol% or more of oxygen to prepare a pre-sintered product (including $Ni_{0.88}Co_{0.05}Mn_{0.07}O_2$).

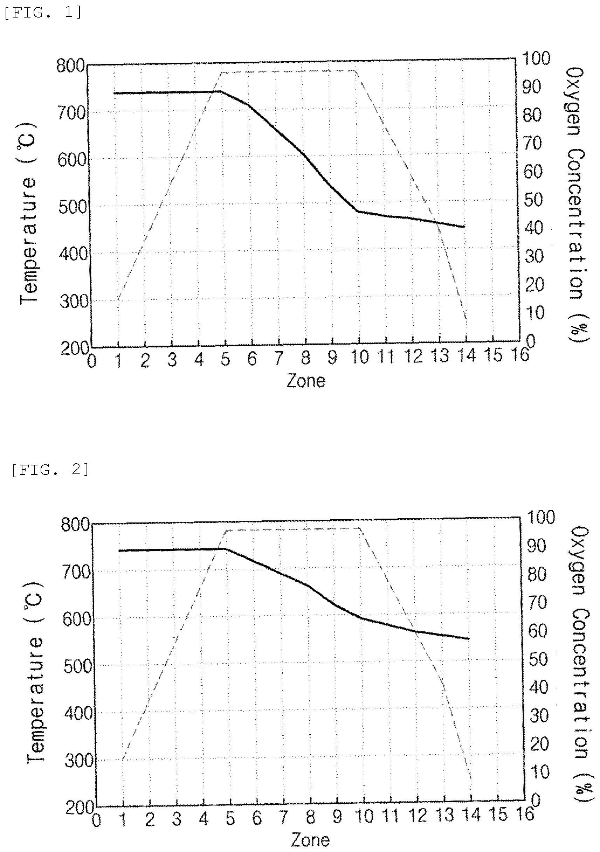

The pre-sintered product and $Al(OH)_3$ were mixed so that a molar ratio of Ni:Co:Mn:Al was 0.86:0.05:0.07:0.02, and secondary sintering was performed at 775°C for 6 hours to prepare a sintered product (including $LiNi_{0.86}Co_{0.05}Mn_{0.07}Al_{0.02}O_2$). In this case, an oxygen atmosphere during the secondary sintering was the same as shown in FIG. 1. The sintered product and water were mixed in a weight ratio of 1:1.2 to wash the sintered product for 5 minutes, and the washed product was reduced pressure filtered so that a water content was in a range of 5% to 15% and then dried at 130°C to prepare a lithium transition metal oxide having a composition of $LiNi_{0.86}Co_{0.05}Mn_{0.07}Al_{0.02}O_2$.

Subsequently, the lithium transition metal oxide and $H_3BO_3$ were mixed in a weight ratio of 100:0.57 and heat-treated at 300°C for 4 hours to prepare a positive electrode active material having a coating layer including Al and B formed on a surface thereof.

**Example 2**

A positive electrode active material was prepared in the same manner as in Example 1 except that the oxygen atmosphere during the secondary sintering in Example 1 was adjusted as shown in FIG. 2.

**Comparative Example 1**

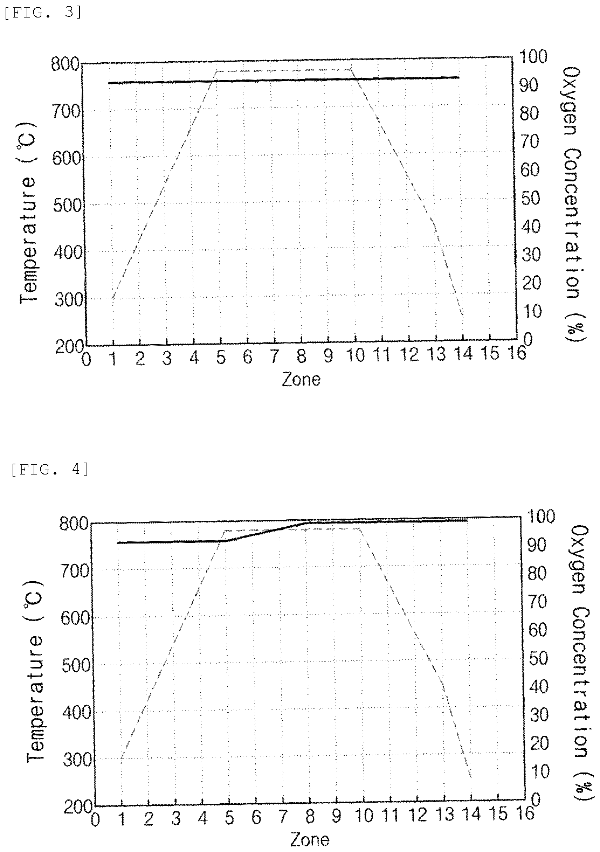

A positive electrode active material was prepared in the same manner as in Example 1 except that secondary sintering was performed while maintaining an oxygen atmosphere containing 90 vol% of oxygen (adjusting as shown in FIG. 3) in Example 1.

**Comparative Example 2**

A positive electrode active material was prepared in the same manner as in Example 1 except that the oxygen atmosphere during the secondary sintering in Example 1 was adjusted as shown in FIG. 4.

**Experimental Example 1: Confirmation of Al Element Concentration of Primary Particle Present in Core Portion of Positive Electrode Active Material**

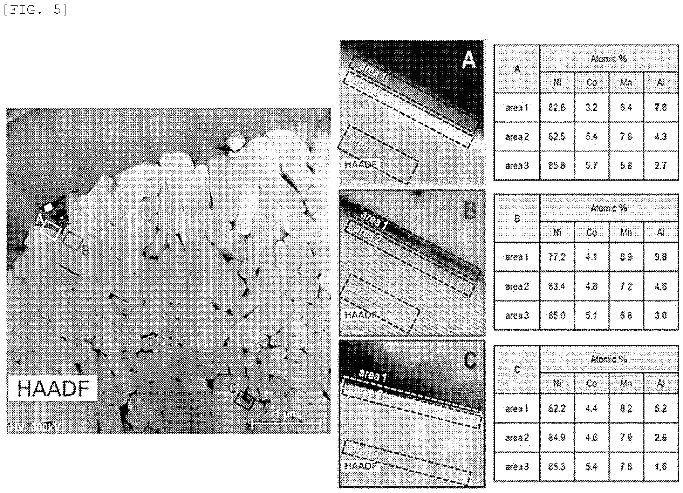

The positive electrode active materials prepared in Example 1 and Comparative Example 1 were analyzed using a transmission electron microscope (TEM) (Titan Double Cs corrected TEM, Titan cubed G2 60-300, FEI Company), and the results thereof are illustrated in FIGS. 5 through 10.

FIG. 5 is a view illustrating element concentrations (atomic%) of a surface portion (area 1) and a center portion (area 3) of the primary particle present in each region of non-core portions (region A and region B) and core portion (region C) of the positive electrode active material of Example 1.

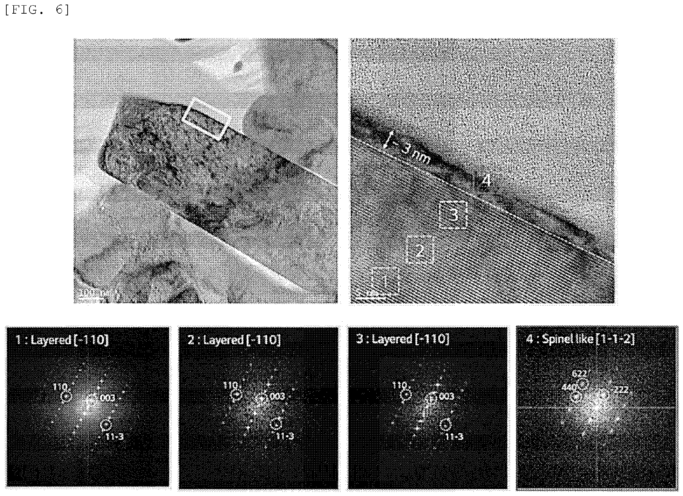

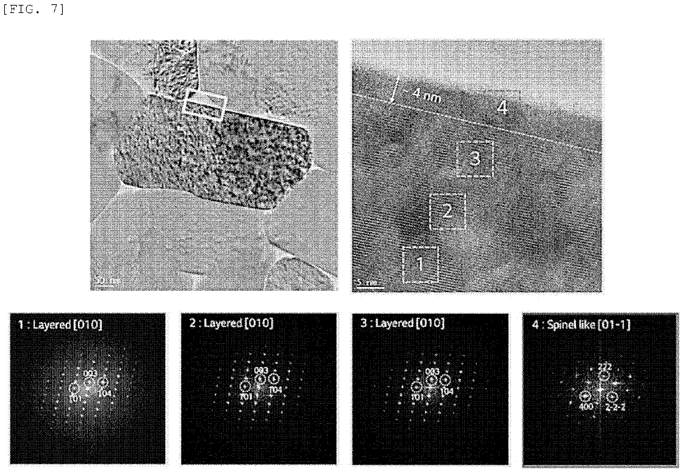

FIG. 6 is a view illustrating SAED patterns of the non-core portions of the positive electrode active material of Example 1, and FIG. 7 is a view illustrating SAED patterns of the core portion of the positive electrode active material of Example 1.

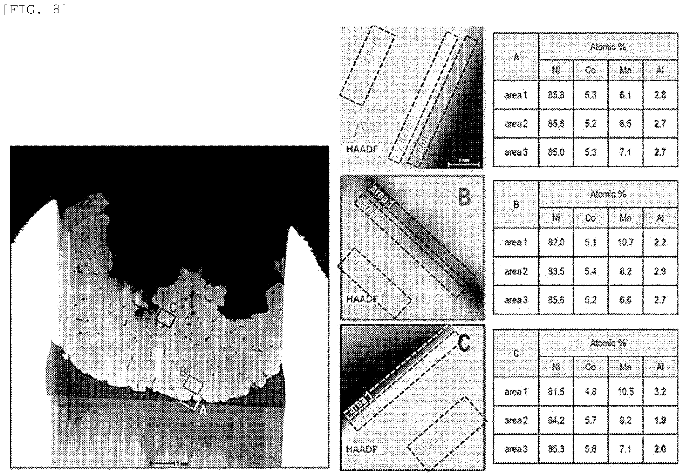

FIG. 8 is a view illustrating element concentrations (atomic%) of a surface portion (area 1) and a center portion (area 3) of the primary particle present in each region of non-core portions (region A and region B) and core portion (region C) of the positive electrode active material of Comparative Example 1.

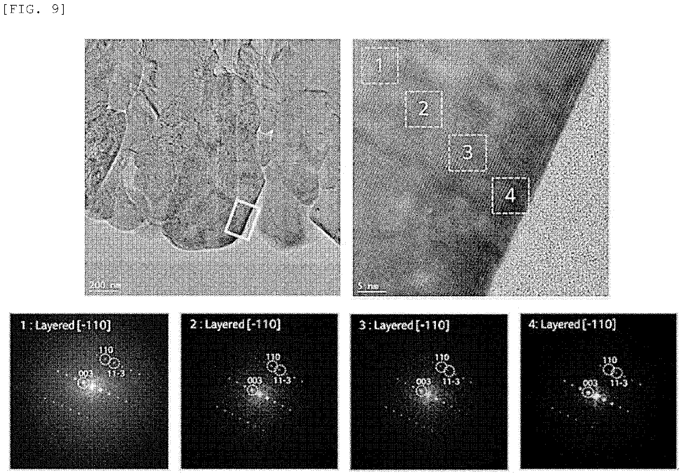

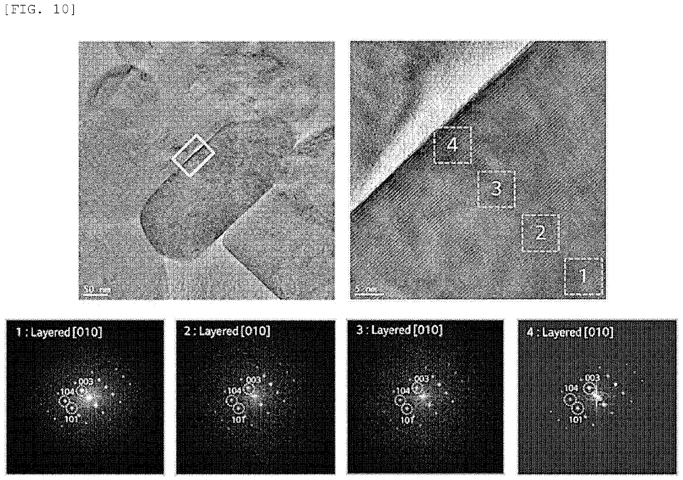

FIG. 9 is a view illustrating SAED patterns of the non-core portions of the positive electrode active material of Comparative Example 1, and FIG. 10 is a view illustrating SAED patterns of the core portion of the positive electrode active material of Comparative Example 1.

Referring to FIGS. 5 through 10, the primary particle included in the core portion, which is a region corresponding to 60 vol% of a total volume of the positive electrode active material from a center of the positive electrode active material prepared in Example 1, had an Al concentration gradient that decreased from the surface portion to the center portion, and it may be confirmed that a concentration (atomic%) of Al in the surface portion (area 1 of region C in FIG. 5) of the primary particle was 3.25 times (=5.2/1.6) a concentration (atomic%) of Al in the center portion (area 3 of region C in FIG. 5) of the primary particle. In addition, it may be confirmed that the positive electrode active material prepared in Example 1 included a coating layer containing a spinel-like phase. In contrast, with respect to the primary particle included in the core portion, which is a region corresponding to 60 vol% of a total volume of the positive electrode active material from a center of the positive electrode active material prepared in Comparative Example 1, it may be confirmed that a concentration (atomic%) of Al in the surface portion was 1.6 times a concentration (atomic%) of Al in the center portion, and it may be confirmed that the positive electrode active material prepared in Comparative Example 1 included a coating layer having a layered structure.

**Experimental Example 2: Evaluation of High-temperature Life and Resistance Characteristics of Lithium Secondary Battery**

Lithium secondary batteries were prepared by using the positive electrode active materials prepared in Examples 1 and 2 and Comparative Examples 1 and 2, respectively, and their high-temperature life and resistance characteristics were checked. In this case, each lithium secondary battery was prepared by using the following method except that each of the positive electrode active materials prepared in Examples 1 and 2 and Comparative Examples 1 and 2 was used.

Specifically, each of the positive electrode active materials prepared in Examples 1 and 2 and Comparative Examples 1 and 2, a conductive agent (carbon black), and a binder (polyvinylidene fluoride) were mixed at a weight ratio of 97.5:1.15:1.35 in an NMP solvent to prepare a composition for forming a positive electrode. A 12 um thick Al current collector was coated with the composition for forming a positive electrode, dried, and then roll-pressed to prepare a positive electrode.

Next, a negative electrode active material (natural graphite), a conductive agent (carbon black), and a binder (SBR+CMC) were mixed in water at a weight ratio of 95:1.5:3.5 to prepare a composition for forming a negative electrode. A copper current collector was coated with the composition for forming a negative electrode, dried, and then roll-pressed to prepare a negative electrode.

Each of the lithium secondary batteries (3 cm x 4 cm) according to Examples 1 and 2 and Comparative Examples 1 and 2 was prepared by stacking the above-prepared positive electrode and negative electrode with a porous polyethylene separator, putting the stack in a battery case, and injecting an electrolyte solution in which 1 M $LiPF_6$ and other additives were dissolved in a mixed solvent in which ethylene carbonate(EC):dimethyl carbonate(DMC):ethyl methyl carbonate(EMC) were mixed in a ratio of 3:4:3.

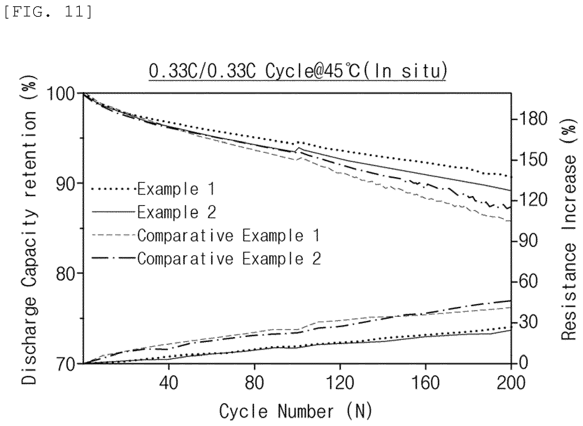

Each of the lithium secondary batteries was charged at a constant current of 0.33 C to 4.25 V in a constant current/constant voltage (CC/CV) mode at 45°C (CV 0.05 C), and then discharged to 3 V in a CC mode. The above charging and discharging behaviors were set as one cycle, and, after this cycle was repeated 200 times, capacity retention (unit: %) and resistance increase rate (unit: %) at a high temperature (45°C) of each of the lithium secondary batteries thus prepared were measured, and the results thereof are presented in Table 1 and FIG. 11 below.

FIG. 11 is a graph illustrating high-temperature life characteristics and high-temperature resistance characteristics of the lithium secondary batteries according to Examples 1 and 2 and Comparative Examples 1 and 2. Specifically, FIG. 11 is a graph illustrating data related to a capacity retention and data related to a resistance increase rate at a high temperature.

[Table 1]

|  | Capacity retention at 45°C (%) | Resistance increase rate at 45°C (%) |
|---|---|---|
| Example 1 | 90.59 | 25.87 |
| Example 2 | 89.14 | 24.27 |
| Comparative Example 1 | 85.78 | 40.76 |
| Comparative Example 2 | 87.15 | 46.16 |

As illustrated in Table 1 and FIG. 11, with respect to the secondary batteries according to Examples 1 and 2, it may be confirmed that high-temperature life characteristics and resistance characteristics were all significantly better than those of the secondary batteries according to Comparative Examples 1 and 2.

As a result, according to the present invention, it may be understood that high-temperature life characteristics of a battery using a positive electrode active material to be prepared may be improved by controlling a doping degree of aluminum present in a surface portion of a primary particle included in a core portion of the positive electrode active material by adding the aluminum in the secondary sintering step after pre-sintering (primary sintering) and performing the secondary sintering in a specific oxygen atmosphere during the preparation of the positive electrode active material. In addition, it may be understood that an increase in resistance at a high temperature of the battery using the positive electrode active material may be suppressed.

**Claims**

1. A method of preparing a positive electrode active material, the method comprising steps of:

   (A) preparing a pre-sintered product by mixing a positive electrode active material precursor containing 70 mol% or more of nickel (Ni) among total metals and a lithium-containing raw material and performing primary sintering;
   (B) preparing a lithium transition metal oxide by mixing the pre-sintered product and an aluminum-containing raw material and performing secondary sintering in an oxygen atmosphere containing 20 vol% to 100 vol% of oxygen; and
   (c) mixing the lithium transition metal oxide and a boron-containing raw material and performing a heat treatment to form a coating layer,

   wherein the secondary sintering is performed while reducing an oxygen concentration according to sintering time.

2. The method of claim 1, wherein the positive electrode active material precursor has a composition represented by Formula 1-1 or Formula 1-2:

[Formula 1-1]        $Ni_{a1}Co_{b1}Mn_{c1}M^1_{d1}(OH)_2$

[Formula 1-2]        $Ni_{a1}Co_{b1}Mn_{c1}M^1_{d1}O \cdot OH$

wherein, in Formula 1-1 and Formula 1-2,
$M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
$0.7 \leq a1 \leq 1.0$, $0 \leq b1 \leq 0.3$, $0 \leq c1 \leq 0.3$, and $0 \leq d1 \leq 0.1$.

3. The method of claim 1, wherein the step (B) further comprises a step (b1) of cooling from a secondary sintering temperature to room temperature after the secondary sintering,
   wherein the step (b1) is performed in an oxygen atmosphere containing 20 vol% to 75 vol% of oxygen.

4. The method of claim 1, wherein an oxygen concentration reduction rate according to the sintering time during the secondary sintering is in a range of 0.5 vol%/hour to 15 vol%/hour.

5. The method of claim 1, wherein a primary sintering temperature is in a range of 500°C to 775°C.

6. The method of claim 1, wherein a secondary sintering temperature is in a range of 730°C to 900°C.

7. The method of claim 1, wherein a secondary sintering temperature is higher than a primary sintering temperature, and a difference between the secondary sintering temperature and the primary sintering temperature is in a range of 10°C to 250°C.

8. The method of claim 1, wherein the aluminum-containing raw material is at least one selected from Al (OH) $_3$, $Al_2O_3$, $AlF_3$, $AlBr_3$, $AlPO_4$, $AlCl_3$, $Al(NO)_3$, Al $(NO_3)_3 \cdot 9H_2O$, $Al_2$ $(SO_4)_3 \cdot H_2O$, Al $(H_2PO_4)$ $_3$, $C_2H_5O_4Al$, $Al(SO)_4$, $NaAlO_2$, $Al_2CoO_4$, $LaAlO_3$, and $MgAl_2O_4$.

9. The method of claim 1, wherein a heat treatment temperature is in a range of 250°C to 400°C.

10. The method of claim 1, wherein the boron-containing raw material is at least one selected from $H_3BO_3$, $B_2H_4O_4$, $B_2O_3$, $LiBO_2$, $Li_2B_4O_7$, and $AlBO_3$.

11. A positive electrode active material comprising a lithium transition metal oxide which contains 70 mol% or more of nickel (Ni) among total metals excluding lithium and is in a form of a secondary particle formed by aggregation of primary particles; and a coating layer containing aluminum (Al) and boron (B) which is formed on the lithium transition metal oxide,
    wherein the primary particle included in a core portion, which is a region corresponding to 60 vol% of a total volume of the positive electrode active material from a center of the positive electrode active material, has an Al concentration gradient that decreases from a surface portion to a center portion, and a concentration of Al in the surface portion of the primary particle is 2 to 6 times a concentration of Al in the center portion of the primary particle.

12. The positive electrode active material of claim 11, wherein the lithium transition metal oxide has a composition represented by Formula 2:

    [Formula 2]        $Li_xNi_{a2}Co_{b2}M_{nc2}Al_{d2}M^1_{e2}O_2$

    wherein, in Formula 2,

    $M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
    $0.9x \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.

13. The positive electrode active material of claim 11, wherein the coating layer comprises a spinel-like phase.

14. A positive electrode for a lithium secondary battery, the positive electrode comprising the positive electrode active material of claim 11.

15. A lithium secondary battery comprising the positive electrode for a lithium secondary battery of claim 14.

[FIG. 1]

[FIG. 2]

[FIG. 3]

[FIG. 4]

[FIG. 5]

| A | Atomic % | | | |
|---|---|---|---|---|
| | Ni | Co | Mn | Al |
| area 1 | 82.6 | 3.2 | 6.4 | 7.8 |
| area 2 | 82.5 | 5.4 | 7.8 | 4.3 |
| area 3 | 85.8 | 5.7 | 5.8 | 2.7 |

| B | Atomic % | | | |
|---|---|---|---|---|
| | Ni | Co | Mn | Al |
| area 1 | 77.2 | 4.1 | 8.9 | 9.8 |
| area 2 | 83.4 | 4.8 | 7.2 | 4.6 |
| area 3 | 85.0 | 5.1 | 6.8 | 3.0 |

| C | Atomic % | | | |
|---|---|---|---|---|
| | Ni | Co | Mn | Al |
| area 1 | 82.2 | 4.4 | 8.2 | 5.2 |
| area 2 | 84.9 | 4.6 | 7.9 | 2.6 |
| area 3 | 85.3 | 5.4 | 7.8 | 1.6 |

[FIG. 6]

[FIG. 7]

[FIG. 8]

[FIG. 9]

[FIG. 10]

[FIG. 11]

0.33C/0.33C Cycle@45°C(In situ)

........ Example 1
———— Example 2
–––– Comparative Example 1
–·–·– Comparative Example 2

<table>
<tr><td colspan="2">INTERNATIONAL SEARCH REPORT</td><td colspan="2">International application No.<br><br>**PCT/KR2022/001115**</td></tr>
</table>

**A.     CLASSIFICATION OF SUBJECT MATTER**

**H01M 4/36**(2006.01)i; **H01M 4/525**(2010.01)i; **H01M 4/505**(2010.01)i; **H01M 4/62**(2006.01)i; **C01G 53/00**(2006.01)i; **H01M 10/052**(2010.01)i

According to International Patent Classification (IPC) or to both national classification and IPC

**B.     FIELDS SEARCHED**

Minimum documentation searched (classification system followed by classification symbols)

H01M 4/36(2006.01); C01G 53/00(2006.01); H01M 10/052(2010.01); H01M 10/0525(2010.01); H01M 4/131(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 1차 소성(first firing), 2차 소성 (second firing), 산소 분위기(oxygen atmosphere), 산소 부피(oxygen volume), 알루미늄(aluminum), 붕소(boron), 코팅층 (coating layer)

**C.     DOCUMENTS CONSIDERED TO BE RELEVANT**

| Category* | Citation of document, with indication, where appropriate, of the relevant passages | Relevant to claim No. |
|---|---|---|
| A | KR 10-2018-0077026 A (LG CHEM, LTD.) 06 July 2018 (2018-07-06)<br>See paragraphs [0044], [0050], [0052]-[0054], [0056], [0058], [0077] and [0079]; and example 1. | 1-15 |
| A | KR 10-2018-0090211 A (LG CHEM, LTD.) 10 August 2018 (2018-08-10)<br>See claims 1, 8, 14 and 15; and example 1. | 1-15 |
| A | KR 10-2177799 B1 (LG CHEM, LTD.) 12 November 2020 (2020-11-12)<br>See entire document. | 1-15 |
| A | WO 2020-195790 A1 (HITACHI METALS, LTD.) 01 October 2020 (2020-10-01)<br>See entire document. | 1-15 |
| A | JP 6673538 B2 (HITACHI METALS, LTD.) 25 March 2020 (2020-03-25)<br>See entire document. | 1-15 |

☐ Further documents are listed in the continuation of Box C.     ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **04 May 2022** | **04 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

International application No.

**PCT/KR2022/001115**

| Patent document cited in search report | | | Publication date (day/month/year) | Patent family member(s) | | | Publication date (day/month/year) |
|---|---|---|---|---|---|---|---|
| KR | 10-2018-0077026 | A | 06 July 2018 | CN | 109562957 | A | 02 April 2019 |
| | | | | CN | 109562957 | B | 03 September 2021 |
| | | | | EP | 3473600 | A1 | 24 April 2019 |
| | | | | JP | 2019-522882 | A | 15 August 2019 |
| | | | | JP | 6771804 | B2 | 21 October 2020 |
| | | | | KR | 10-2133916 | B1 | 15 July 2020 |
| | | | | US | 2019-0300382 | A1 | 03 October 2019 |
| | | | | WO | 2018-124593 | A1 | 05 July 2018 |
| KR | 10-2018-0090211 | A | 10 August 2018 | CN | 109643794 | A | 16 April 2019 |
| | | | | CN | 109643794 | B | 23 November 2021 |
| | | | | EP | 3486979 | A1 | 22 May 2019 |
| | | | | EP | 3486979 | B1 | 14 October 2020 |
| | | | | KR | 10-2187969 | B1 | 07 December 2020 |
| | | | | PL | 3486979 | T3 | 25 January 2021 |
| | | | | US | 11121357 | B2 | 14 September 2021 |
| | | | | US | 2019-0165362 | A1 | 30 May 2019 |
| | | | | WO | 2018-143734 | A1 | 09 August 2018 |
| KR | 10-2177799 | B1 | 12 November 2020 | CN | 110650923 | A | 03 January 2020 |
| | | | | EP | 3611132 | A2 | 19 February 2020 |
| | | | | EP | 3611132 | B1 | 01 September 2021 |
| | | | | JP | 2021-501980 | A | 21 January 2021 |
| | | | | KR | 10-2019-0060705 | A | 03 June 2019 |
| | | | | US | 2020-0350554 | A1 | 05 November 2020 |
| | | | | WO | 2019-103522 | A2 | 31 May 2019 |
| | | | | WO | 2019-103522 | A3 | 18 July 2019 |
| WO | 2020-195790 | A1 | 01 October 2020 | CN | 112654585 | A | 13 April 2021 |
| | | | | EP | 3950599 | A1 | 09 February 2022 |
| | | | | JP | 6986211 | B2 | 22 December 2021 |
| | | | | KR | 10-2021-0035300 | A | 31 March 2021 |
| | | | | KR | 10-2022-0025103 | A | 03 March 2022 |
| JP | 6673538 | B2 | 25 March 2020 | CN | 111052464 | A | 21 April 2020 |
| | | | | JP | 2020-064878 | A | 23 April 2020 |
| | | | | JP | 2020-103046 | A1 | 28 May 2020 |
| | | | | JP | 6852820 | B2 | 31 March 2021 |
| | | | | KR | 10-2020-0033899 | A | 30 March 2020 |
| | | | | KR | 10-2022-0025103 | A | 03 March 2022 |
| | | | | US | 2021-0126237 | A1 | 29 April 2021 |
| | | | | WO | 2019-103046 | A1 | 31 May 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210008933